# EUROPEAN PATENT APPLICATION

(11) **EP 1 944 766 A1**
(43) Date of publication of application: **16.07.2008**
(21) Application number: 08150070.4
(22) Date of filing: 07.01.2008
(51) Int. Cl.: G11B 20/00, G11B 27/32, G06F 21/00, G11B 19/12, G11B 23/28

(54) **Method of recording and reproducing data on and from optical disc**

(30) Priority: 15.01.2007 KR 20070004196
(71) Applicant: Hitachi-LG Data Storage Korea Inc., Seoul 150-010 (KR)
(72) Inventor: Jung, Younghoon, Gyeonggi-do 451-713 (KR); Yang, Jee Hoon, Gyeonggi-do 451-713 (KR)
(74) Representative: Vossius & Partner

(57) **Abstract**

A method, device and computer program product for recording data on an optical disc while being encrypted using an encryption code. The encryption code is selectively recorded in a predetermined region of the optical disc. The encryption code is read from the predetermined region, and data read from the optical disc is decrypted and reproduced on the basis of the read encryption code. The encryption code can be randomly generated. When the optical disc is one of DVD-R/+R/-RW/+RW, the predetermined region is a first buffer zone disposed in a lead-in area of the optical disc. When the optical disc is DVD-RAM, the predetermined region is a reserved region subsequent to a first DMA disposed in a lead-in area or a reserved region subsequent to a fourth DMA disposed in a lead-out area of the optical disc.

## Description

The present application is related to and claims priority to Korean patent application 10-2007-004196, filed on January 15, 2007, the contents of which is incorporated herein by reference.

The present invention relates, in general, to a method, device and computer program product for recording and reproducing data on and from an optical disc and, more particularly, to a method of encrypting and recording data and reproducing the encrypted and recorded data in order to prevent data from being illegally duplicated.

Recently, an optical disc device, for example, a Digital Versatile Disc (DVD) recorder, capable of recording large amounts of data, such as high quality video data and high quality audio data, on an optical disc, has been commercialized and widely popularized.

The user of an optical disc device keeps the user's own information, for example, documents, pictures, and moving image data, by recording the information on an optical disc, in order to store, back up or subsequently reproduce the above information.

However, an optical disc, on which information related to the private life of a person, or important information, is stored, may be illegally distributed and duplicated. Data recorded on the optical disc is not degraded or subjected to data loss even after the disc is duplicated, and thus the effects of illegal duplication have been widespread. Therefore, an efficient method of solving the problem of illegal duplication is urgently required.

Accordingly, the present invention has been made keeping in mind the above problems occurring in the prior art, and an object of the present invention is to provide a method of recording and reproducing data on and from an optical disc, which can prevent the optical disc from being illegally duplicated.

In order to accomplish the above object, the present invention provides a method, device and computer program product for recording data on an optical disc, including recording data encrypted using an encryption code on the optical disc; and selectively recording the encryption code in a specific region of the optical disc.

Further, the present invention provides a method, device and computer program product for reproducing data from an optical disc, including reading an encryption code from a specific region of the optical disc; and decrypting and reproducing data read from the optical disc, using the encryption code.

The encryption code may be randomly generated using an identifier of the optical disc and an arbitrary random number, and may have a length of N bytes, one or more bits of which have values other than '0'.

An operation of recording the encryption code may not be performed when an encryption code, previously recorded in the specific region, is used.

The specific region may be a first buffer zone disposed in a lead-in area of the optical disc when the optical disc is one of Digital Versatile Discs (DVDs) having recordable DVD format (DVD-R), recordable DVD format (DVD+R), rewritable DVD format (DVD-RW), and rewritable DVD format (DVD+RW). The specific region may be a reserved region subsequent to a first Defect Management Area (DMA) disposed in a lead-in area of the optical disc when the optical disc is DVD-Random Access Memory (DVD-RAM). The specific region may be a reserved region subsequent to a fourth DMA disposed in a lead-out area of the optical disc when the optical disc is DVD-RAM and data has been recorded in the reserved region subsequent to the first DMA.

The above and other objects, features and other advantages of the present invention will be more clearly understood from the following detailed description taken in conjunction with the accompanying drawings, in which:

FIG. 1 is a diagram showing the construction of an optical disc device to which the present invention is applied;

FIG. 2 is a flowchart showing the operation of a method of recording data on an optical disc according to the present invention;

FIG. 3 is a diagram showing a first embodiment of a process of recording an encryption code according to the present invention;

FIG. 4 is a diagram showing a second embodiment of a process of recording an encryption code according to the present invention; and

FIG. 5 is a flowchart showing the operation of a method of reproducing data from an optical disc according to the present invention.

Hereinafter, a method of recording and reproducing data on and from an optical disc according to embodiments of the present invention will be described in detail with reference to the attached drawings.

An optical disc used for recording has a region reserved for information related to recording, such as defect management. Such a region is disposed in a lead-in area and/or lead-out area, rather than a data area, and data recorded on the region is only used to control the recording and reproduction of data on the optical disc, but cannot be accessed by a user.

The present invention encrypts data, records the encrypted data in the data area of an optical disc, and records an encryption code used for the encryption in a specific region in a lead-in area or lead-out area. Further, when the optical disc is reproduced, the present invention reads the encryption code from the specific region and decrypts and reproduces the data recorded in the data area on the basis of the read encryption code.

The encryption code can be randomly generated. For example, the encryption code can be randomly generated using both a Disc IDentification (Disc_ID), which is a disc identifier included in the navigation information of the optical disc, and an arbitrary random number, as code generation factors. Hereinafter, the encryption code is referred to as a 'Disc Unique ID (DUID)' code.

The specific region is a region in which information required to control the recording or reproduction of data on or from an optical disc is recorded. Data recorded in the specific region is not duplicated on other discs even if the disc is duplicated.

If an optical disc is one of Digital Versatile Discs (DVDs) having formats of recordable DVD format (DVD-R)/recordable DVD format (DVD+R)/rewritable DVD format (DVD-RW)/rewritable DVD format (DVD+RW), the DUID code is recorded as a 16-byte value in a first buffer zone disposed in a lead-in area. If an optical disc is DVD-Random Access Memory (DVD-RAM), the DUID code is recorded as a 16-byte value in a reserved region subsequent to a first Defect Management Area (DMA 1) which is disposed in a lead-in area, or a reserved area subsequent to a fourth DMA (DMA 4) which is disposed in a lead-out area.

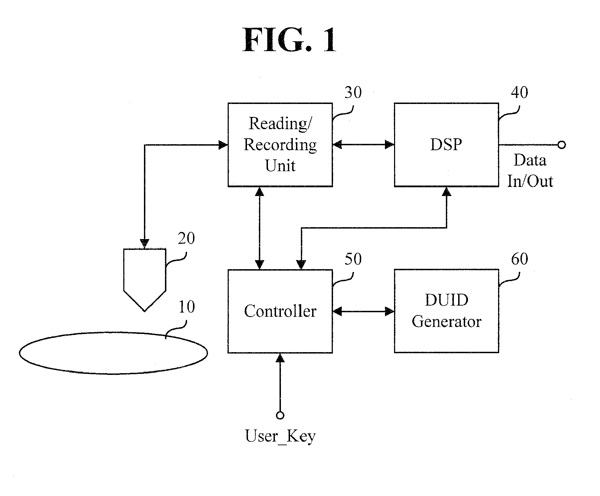

FIG. 1 is a diagram showing the construction of an optical disc device to which a method of recording and reproducing data on and from an optical disc according to the present invention is applied.

The optical disc device, such as a DVD recorder, to which the present invention is applied, includes an optical pickup 20, a reading/recording unit 30, a digital signal processing (DSP) unit 40, a controller 50, and an encryption code (DUID) generator 60.

The controller 50 controls the encryption code generator 60 so that a DUID code, which is an encryption code, is randomly generated in response to the user's request for the encryption and recording of data, and controls the digital signal processing unit 40 so that audio data, video data, user files, etc. are encrypted using the DUID code. Further, the controller 50 controls the reading/recording unit 30 so that the encrypted data is recorded in the data area of the optical disc 10 and the DUID code is recorded in the specific region, such as the first buffer zone, the reserved region subsequent to the first DMA, or the reserved region subsequent to the fourth DMA after recording has been completed.

Further, in response to a reproduction request for the optical disc 10, the controller 50 controls the reading/recording unit 30 so that the DUID code, recorded in the specific region of the optical disc 10, is read, and controls the digital signal processing unit 40 so that the data read from the data area is decrypted and reproduced. This operation is described below in detail.

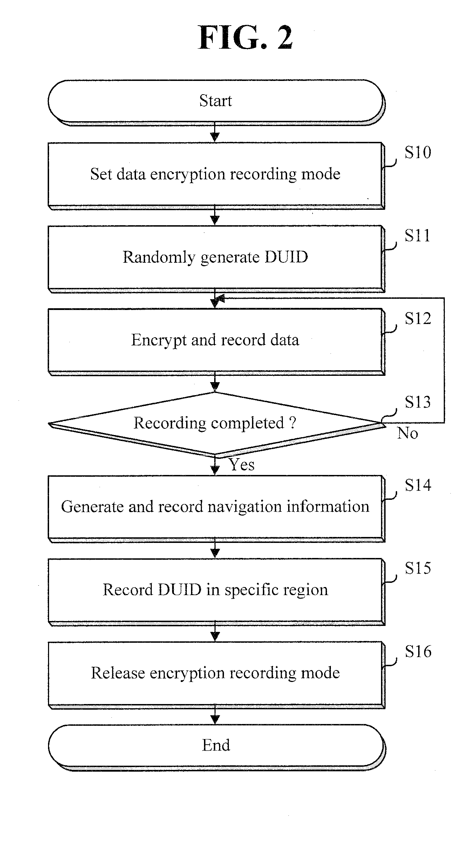

FIG. 2 is a flowchart showing the operation of a method of recording data on an optical disc according to the present invention.

The controller 50 sets a data encryption recording mode in response to the user's request at step S10, and controls the encryption code generator 60 so that a 16-byte DUID code, one or more bits of which have values other than '0', is randomly generated at step S11. In this case, the controller 50 can randomly generate the DUID code using both a disc ID, included in the navigation information of the optical disc 10, and can randomly generate an arbitrary random number as code generation factors.

Further, the controller 50 performs a data encryption operation of controlling the digital signal processing unit 40 to encrypt user data using the DUID code, and a data recording operation of controlling the reading/recording unit 30 to record the encrypted data in the data area of the optical disc 10 at step S12.

When the above-described data encryption and recording operation has been completed at step S13, the controller 50 creates navigation information required to control the reproduction of data, which has been recorded in the data area, and controls the reading/recording unit 30 so that the navigation information is recorded in the lead-in area of the optical disc 10 at step S14.

Further, the controller 50 records a 16-byte DUID code, used for the encryption of data, in a specific region in the lead-in area at step S15. If the optical disc 10 is one of DVDs having the formats of DVD-R/-R-/-RW/+RW, the specific region is a first buffer zone disposed in the lead-in area.

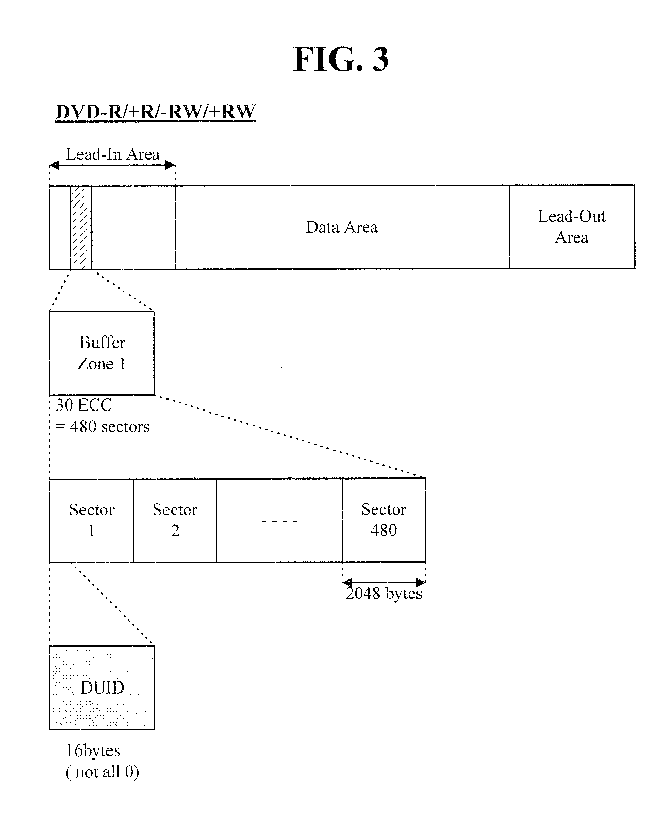

As shown, in FIG. 3, the first buffer zone is composed of 30 Error Correction Code (ECC) blocks or 480 sectors, and null data having a value of '0' is typically recorded in a first sector (sector 1). However, when the DUID code is recorded in the first sector, according to the present invention, values other then '0' are recorded in one or more bits of the first 16 bytes in the first sector of the first buffer zone. Further, the DUID code can be recorded in the first sector of each ECC block.

When the optical disc 10 is DVD-RAM, the specific region may be a reserved region subsequent to the first DMA (DMA 1) disposed in the lead-in area, or may be a reserved region subsequent to the fourth DMA (DMA 4) disposed in the lead-out area if some valid data has been previously recorded in the reserved region subsequent to the first DMA.

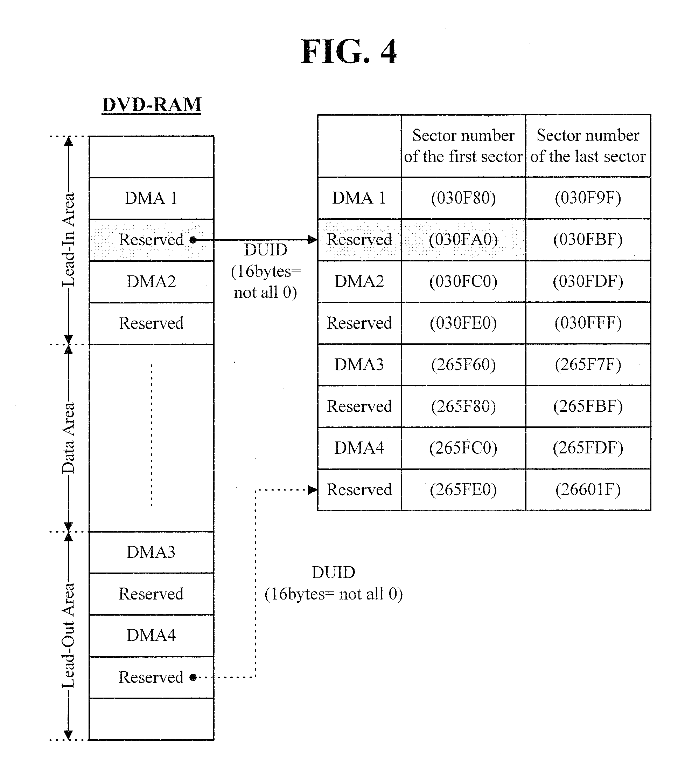

As shown in FIG. 4, null data having a value of '0' is typically recorded throughout the entire reserved region subsequent to the first DMA (DMA 1). However, when the DUID code is recorded in the reserved region subsequent to the first DMA according to the present invention, values other than '0' are recorded in one or more bits of the first 16 bytes in the reserved region subsequent to the first DMA.

Further, when the recording of the DUID code has been completed in this way, the controller 50 releases the encryption recording mode at step S16, and waits for user input, such as a keystroke, etc.

Meanwhile, if the encryption recording mode is set, the controller 50 first determines whether a DUID code is recorded in the specific region of the optical disc 10. If it is determined that no DUID code is recorded in the specific region, data can be recorded according to the above-described process. However, if it is determined that the DUID code has been previously recorded in the specific region, the controller 50 encrypts data using the DUID code read from the specific region without performing the step S11 of creating the DUID code, and does not perform the step S15 of recording the DUID code.

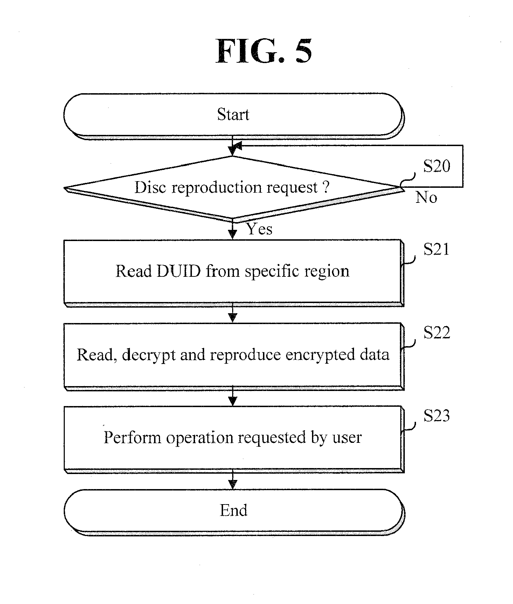

FIG. 5 is a flowchart showing the operation of a method of reproducing data from an optical disc according to the present invention.

When the reproduction of an optical disc on which data is encrypted and recorded is requested at step S20, the controller 50 controls the reading/recording unit 30 so that a DUID code recorded in a specific region of the optical disc 10 is found and is read at step S21.

When the optical disc 10, the reproduction of which has been requested, is one of DVDs having the formats of DVD-R/+R/-RW/+RW, the controller 50 reads the DUID code from the first buffer zone disposed in the lead-in area of the optical disc 10. When the optical disc 10 is DVD-RAM, the controller 50 reads the DUID code from a reserved region subsequent to the first DMA disposed in the lead-in area of the optical disc 10.

When the optical disc 10 is DVD-RAM, and the DUID code is not recorded in the reserved region subsequent to the first DMA, the controller 50 reads the DUID code from a reserved region subsequent to the fourth DMA disposed in the lead-out area of the optical disc 10.

As described above, since the DUID code is recorded as a 16-byte value, one or more bits of which have values other than '0', if a 16-byte value, all bits of which are '0', is found in the specific region, it can be concluded that this value is not a DUID code.

Further, the controller 50 controls the reading/recording unit 30 so that data is read from the data area, and controls the digital signal processing unit 40 so that a series of reproduction operations for decrypting and reproducing the read data is performed at step S22. Thereafter, the controller 50 performs an operation requested by the user at step S23.

Therefore, the optical disc on which data is recorded according to the present invention cannot be duplicated by any optical disc devices, including the optical disc device to which the present invention is applied. In an optical disc device to which the present invention is not applied, an optical disc on which data has been recorded according to the present invention cannot be reproduced.

For reference, the present invention can also be applied to the case where a Personal Computer (PC) and an Optical Disc Drive (ODD) are connected to each other and then used. In this case, the ODD performs a predetermined authentication procedure, previously stipulated together with a host, which is the recording program of the PC, and then performs the method of recording and reproducing data according to the present invention.

In the authentication procedure, the host and the drive encrypt random numbers, respectively created thereby, exchange the encrypted random numbers with each other, exchange information related to a method of decrypting the encrypted random numbers with each other, identify the exchanged encrypted random numbers on the basis of such encryption/decryption information, create unique identification information on the basis of the encryption/decryption information, and share the created identification information between the host and the drive.

First, the drive receives an encrypted host random number R1, decryption information related to the decryption of the random number R1, identification information assigned to authentication between the drive and the host, etc., from the host. That is, the host transmits the encrypted host random number R1, bit position index value (x) and a Revocation Block Node Key (RBNK) corresponding to the decryption information, and an Application Authentication Unique ID (AAUID) corresponding to the identification information related to authentication, to the drive.

Thereafter, the drive decrypts the random number R1 based on the decryption information. That is, the drive generates a predetermined key by encrypting the 128-bit RBNK received from the host according to an Advanced Encryption Standard (AES) through the use of a key PK[x] that is selected from among its own 32 128-bit keys PK1[32] in response to the bit position index value (x), and thus decodes the random number R1 received from the host using the generated key.

Further, the drive encrypts the data, which has been obtained using a predetermined method based on both the decrypted random number R1 and the random number R2 generated by the drive, through a predetermined method, thus obtaining an encryption key. The obtained encryption key is information required in order to generate the DUID information.

That is, the drive encrypts the random number R2 and the decoded R1 using its own two 128-bit keys (PK2 and CS1) in an AES Cipher Block Chaining (CBC) mode to obtain data, encrypts this data using the CS1, which is the 128-bit key, and thus obtain a key required to encrypt DUID.

Further, the drive generates data required to authenticate the random number R1 and transmits the data to the host. That is, the drive transmits the data obtained from the random numbers R1 and R2 to the host, performs predetermined processing on the identification information received from the host, obtains decryption information required to decrypt the data obtained from the random numbers R1 and R2, and transmits the decryption information to the host.

That is, the drive transmits the data, encrypted using the random numbers R1 and R2 in the AES CBC mode, to the host, performs revocation block processing on the 32-bit AAUID received from the host to obtain both a bit position index Value and an Application Authentication Revocation Block (AARB) node key related to decryption, and transmits the bit position index value and the AARB node to the host.

Further, the drive AES-encrypts the random number R2 using the encryption key (KB), and transmits the AES-encrypted random number R2 to the host. The information generated at this time is DUID information.

Thereafter, the host obtains the random number R1 from the data transmitted from the drive (data encrypted in the AES CBC mode and obtained from the random numbers R1 and R2) on the basis of the decryption information transmitted from the drive, that is, the AARB node key and the bit position index value, and compares the random number R1 with the random number R1, which has been transmitted by the host to the drive, thus completing authentication between the host and the drive. Through the above process, the host and the drive can share the DUID information or the key (KB) required to encrypt the DUID information therebetween.

The drive can perform the method of recording and reproducing data according to the present invention only when authentication with the host has succeeded.

The present invention may be practiced in software stored on a computer readable medium such as a disk or computer memory device. A description of how a computer works is found in "How Computers Work," Ron White, Que Publishing, 8th Edition, November 2005, the entire contents of which being incorporated herein by reference. The software associated with the present invention may be installed in a DVD recording or copying terminal device, such as a desktop computer, a laptop computer, a DVD recorder or another DVD recording or copying terminal device.

The present invention is advantageous in that an optical disc on which information about a user is recorded can be efficiently prevented from being illegally duplicated.

Although the preferred embodiments of the present invention have been disclosed for illustrative purposes, those skilled in the art will appreciate that various modifications, additions and substitutions are possible, without departing from the scope and spirit of the invention as disclosed in the accompanying claims.

## Claims

1. A method of recording data on an optical disc, comprising:
recording data encrypted using an encryption code on the optical disc; and
selectively recording the encryption code in a predetermined region of the optical disc.

2. The method according to claim 1, further comprising:
randomly generating the encryption code.

3. The method according to claim 2, further comprising:
generating the encryption code using an identifier of the optical disc and an arbitrary random number.

4. The method according to any of claims 1 to 3, wherein the step of recording data encrypted using an encryption code comprises:
recording data encrypted using an encryption code having a length of N bytes, one or more bits of which have values other than '0'.

5. The method according any of claims 1 to 4, wherein the step of recording data encrypted using an encryption code comprises:
determining whether or not another encryption code was previously recorded on the optical disc; and
prohibiting a recording of the encryption code if the another encryption code is detected.

6. The method according any of claims 1 to 5, wherein the step of selectively recording the encryption code in a predetermined region of the optical disc comprises:
selectively recording the encryption code in a first buffer zone disposed in a lead-in area of the optical disc when the optical disc is one of Digital Versatile Discs (DVDs) having recordable DVD format (DVD-R), recordable DVD format (DVD+R), rewritable DVD format (DVD-RW), and rewritable DVD format (DVD+RW).

7. The method according any of claims 1 to 5, wherein the step of selectively recording the encryption code in a predetermined region of the optical disc comprises:
selectively recording the encryption code in a reserved region subsequent to a first Defect Management Area (DMA) disposed in a lead-in area of the optical disc when the optical disc is DVD-Random Access Memory (DVD-RAM).

8. The method according to claim 7, wherein the step of selectively recording the encryption code in a reserved region subsequent to a first Defect Management Area (DMA) comprises:
selectively recording the encryption code in a reserved region subsequent to a fourth DMA disposed in a lead-out area of the optical disc when the optical disc is DVD-RAM and data has been recorded in the reserved region subsequent to the first DMA.

9. The method according any of claims 1 to 8, further comprising:
performing authentication together with a host before recording the data; and
generating a key generated during the authentication to be a basis of generation of the encryption code.

10. A method of reproducing data from an optical disc, comprising:
reading an encryption code from a predetermined region of the optical disc; and
decrypting and reproducing data read from the optical disc, using the encryption code.

11. The method according to claim 10, wherein the step of reading an encryption code comprises:
reading an encryption code having a length of N bytes, one or more bits of which have values other than '0'.

12. The method according to claim 10 or 11, wherein the step of reading an encryption code from a predetermined region of the optical disc comprises:
reading the encryption code from a first buffer zone disposed in a lead-in area of the optical disc when the optical disc is one of Digital Versatile Discs (DVDs) having recordable DVD format (DVD-R), recordable DVD format (DVD+R), rewritable DVD format (DVD-RW), and rewritable DVD format (DVD+RW).

13. The method according to claim 10 or 11, wherein the step of reading an encryption code from a predetermined region of the optical disc comprises:
reading the encryption code from a reserved region subsequent to a first Defect Management Area (DMA) disposed in a lead-in area of the optical disc when the optical disc is DVD-Random Access Memory (DVD-RAM).

14. The method according to claim 13, wherein the step of reading an encryption code from a predetermined region of the optical disc comprises:
reading the encryption code from a reserved region subsequent to a fourth DMA disposed in a lead-out area of the optical disc when the optical disc is DVD-RAM and data has been recorded in the reserved region subsequent to the first DMA.

15. The method according to any of claims 10 to 14, further comprising:
performing authentication together with a host; and
performing said step of decrypting and reproducing data only when the authentication has succeeded.

16. A recording or copying terminal device configured to record or copy an optical disc, comprising:
an optical pickup;
a reading/recording unit;
an encryption code generator configured to generate an encryption code; and
a controller configured to control said optical pickup, reading/recording unit and encryption code generator so that recording data is encrypted using the encryption code on the optical disc, and the encryption code is selectively recorded in a predetermined region of the optical disc.

17. The recording or copying terminal device of Claim 16, wherein the encryption code generator is configured to generate the encryption code using an identifier of the optical disc and an arbitrary random number.

18. A recording or copying terminal device configured to record or copy an optical disc, comprising:
an optical pickup;
a reading/recording unit;
an encryption code generator configured to generate an encryption code; and
a controller configured to control said optical pickup, reading/recording unit and encryption code generator so that the encryption code is read from a predetermined region of the optical disc, and data read from the optical disc is decrypted and reproduced using the encryption code.

19. The recording or copying terminal device of Claim 18, wherein the reading/recording unit is configured to read an encryption code having a length of N bytes, one or more bits of which have values other than '0'.

20. Computer program product for recording/reproducing data on/from an optical disc using a method according to any of claims 1 to 15.
